# EUROPEAN PATENT APPLICATION

(11) **EP 1 826 158 A2**
(43) Date of publication of application: **29.08.2007**
(21) Application number: 07103067.0
(22) Date of filing: 26.02.2007
(51) Int. Cl.: B65G 47/52, B65G 47/84

(54) **Stabiliser for bottles**

(30) Priority: 24.02.2006 NL 1031234
(71) Applicant: Rowel Holding B.V., 2871 RK Schoonhoven (NL)
(72) Inventor: Groote, Peter Willem, 3355 Ba Papendrecht (NL)
(74) Representative: Verhees, Godefridus Josephus Maria

(57) **Abstract**

A stabiliser 1 has a main electrical motor 3 that drives a main axle 5. A carrier 7 is fastened on the main axle in which two auxiliary axles 9, 11 are connected with bearings. A finger 13, 15 is fastened on each auxiliary axle near the top extremity and an auxiliary gear wheel 17, 19 is fastened near the bottom extremity. The auxiliary gear wheels interlock with a main gear wheel 2, which is connected with bearings on the main axle 5. This main gear wheel is driven by an auxiliary electrical motor 23.

The movements of the fingers 13 and 15 can be controlled by adjusting the rpm of the auxiliary motor 23. If the main gear wheel 21 turns as quickly as the carrier 7, the auxiliary axles 9, 11 do not turn and the fingers 13, 15 are stationary with respect to the carrier 7. The auxiliary axles 9, 11 and with them the fingers 13, 15 turn left or right by briefly allowing the main gear wheel 21 to turn more quickly or slowly than the carrier 7.

## Description

### BACKGROUND OF THE INVENTION:

### Field of the invention

The invention relates to a stabiliser for bottles comprising a carrier provided with a main axle, in which carrier at least one turnable auxiliary axle is present on which a finger is fastened, which stabiliser moreover comprises devices to turn the auxiliary axle when the carrier turns, in such a way that the finger briefly pushes against a bottle during operation in order to move it, and which stabiliser comprises a main motor to drive the carrier. A stabiliser is for example used in a set-up for printing bottles in order to remove them from the end of a conveyor belt or to place bottles upright at the beginning of a conveyor belt.

### Prior art

Such a stabiliser is known from European patent application EP 0 811486. In the well-known stabiliser there are four auxiliary axles present with fingers on the carrier and the devices for turning the auxiliary axles are formed by a cam disc provided with a cam slot in which pins run that turn the fingers. The cam disc must be turned to adjust the movement pattern of the fingers. The stabiliser must therefore be stopped whenever the cam disc is turned in order to determine the correct movement pattern. This makes the setting of the well-known stabiliser a very time consuming activity.

### Summary of the invention

An objective of the invention is to provide a stabiliser of the sort described in the preamble, in which the movement pattern of the finger can be easily adjusted when the carrier is turned. For this purpose the stabiliser according to the invention is characterised in that the devices used to turn the auxiliary axle comprise a main wheel that is present concentrically with respect to the main axle, and an auxiliary wheel fastened on the auxiliary axle that is connected to the main wheel, and an auxiliary motor to drive the main wheel. The movement of the finger can be controlled by adjusting the rpm of the auxiliary motor. If the main wheel turns as fast as the carrier, the auxiliary axle does not turn and the finger is stationary with respect to the carrier. The auxiliary axle and with it the finger turns left or right by allowing the main wheel briefly to turn faster or slower than the carrier. The movement pattern of the finger can therefore be easily controlled (by changing the rpm of the auxiliary motor). This can occur without problems during operation so that it is therefore unnecessary to stop the carrier first.

An embodiment of the stabiliser according to the invention is characterised in that the auxiliary motor and the main motor are motors whose rotation speed can be adjusted depending on the angle. Preferably the auxiliary and main motors are servo-motors. This allows the movement of the finger to be started in any desired position of the carrier and allows it to be turned during any desired size of the angular turn of the carrier at any desired speed and any desired angle, so that it is possible to synchronise the finger with the speeds of the feed and removal of bottles.

The main wheel and the auxiliary wheels can be connected together in any way, for example via a geared belt. However, the main wheel and the auxiliary wheel are preferably interlocking gear wheels.

A further embodiment of the stabiliser according to the invention is characterised in that the carrier is fastened on the main axle and the main wheel can be freely turned about the main axle. This, for practical reasons, is preferred to the situation where the main wheel is fastened on the main axle and the carrier can be freely turned about the main axle, which however is also possible.

Preferably the stabiliser has two or more auxiliary axles connected on bearings in the carrier with fingers and auxiliary wheels that are present at the same angle to each other around the main axle.

An embodiment of the stabiliser according to the invention is characterised in that an arm is fastened to the main axle at a distance from of the carrier to which a clamp for a bottle opening is fastened, which clamp can be moved in the axial direction of the main axle by movement devices, in which the movement of the clamp can be set independently of the turning of the finger. In this the time at which the clamp grips a bottle opening and then releases it can be set until the bottles remain stable can be determined during operation.

Preferably the movement devices are formed by an air cylinder, which is fastened to the arm, and a piston that can be moved therein to which the clamp is fastened.

### Brief description of the drawings

The invention will be elucidated more fully below on the basis of drawings in which an embodiment of the stabiliser according to the invention is shown. In these drawings:
Figure 1 shows an embodiment of the stabiliser according to the invention in lengthwise cross-section;
Figure 2 shows an expanded view of the detail A of the stabiliser as marked in figure 1; and
Figure 3 shows the detail shown in figure 2 from above.

### Detailed description of the drawings

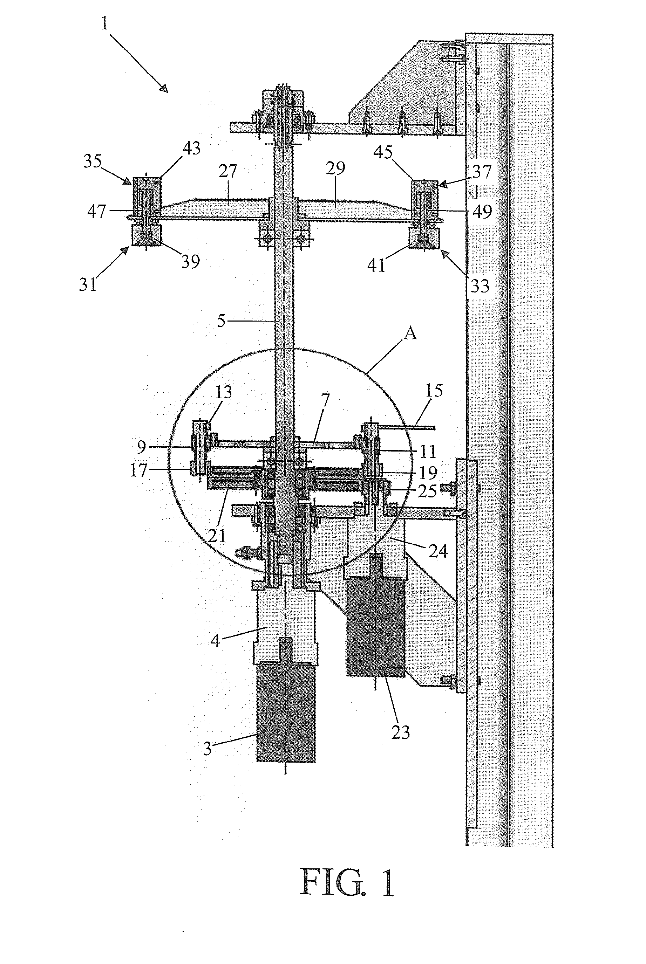

Figure 1 shows an embodiment of the stabiliser according to the invention in lengthwise cross-section. The stabiliser 1 has a main electrical motor 3 that drives a main axle 5 via a reducing gear 4. A carrier 7 is fastened to the main axle, where an auxiliary axle 9, 11 is connected with bearings near each extremity. A finger 13, 15 is fastened on each auxiliary axle near the top extremity and an auxiliary gear wheel 17, 19 is fastened near the bottom extremity. The auxiliary gear wheels are interlocked with a main gear wheel 21, which is connected with bearings on the main axle 5. This main gear wheel is driven by an auxiliary electrical motor 23 via a further reducing gear 24 and a further gear wheel 25 that is present on the axle of the auxiliary electrical motor. The main and auxiliary electrical motors are built as servo-motors.

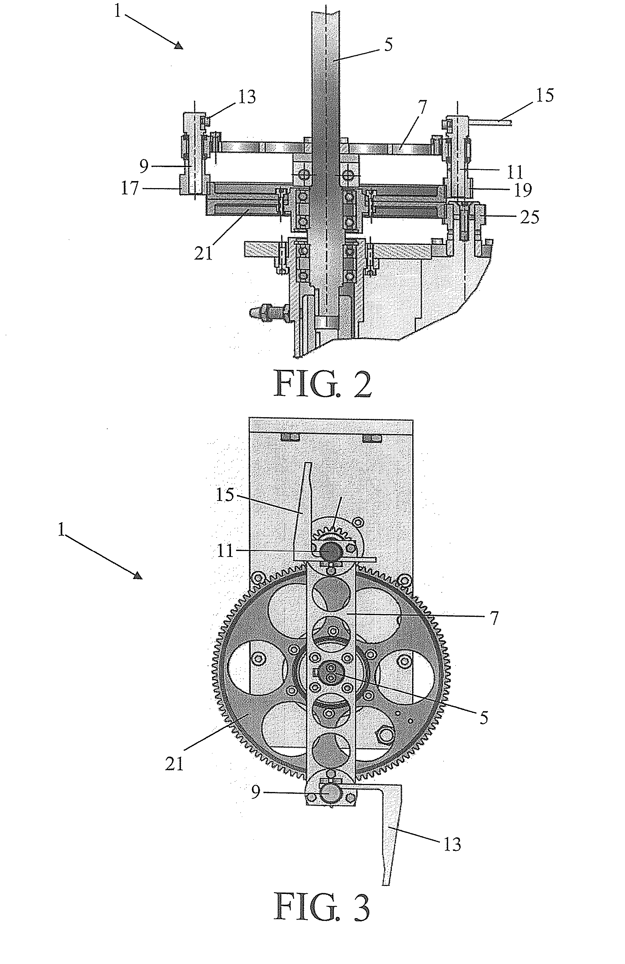

The auxiliary electrical motor 23, the main gear wheel 21 and the auxiliary gear wheels 17, 19 form devices to turn the auxiliary axles 9, 11 with respect to the carrier 7. Figures 2 and 3 show an expanded view of the detail A circled in figure 1 of the stabiliser in lengthwise cross-section and from above respectively, in which the devices for turning the auxiliary axles are clearly visible. The movements of the fingers 13 and 15 can be controlled by adjusting the rpm of the auxiliary motor 23. This can easily set the movement pattern of the fingers 13, 15 during the operation of the carrier 7. If the main gear wheel 21 turns as quickly as the carrier 7, the auxiliary axles 9, 11 do not turn and the fingers 13, 15 are stationary with respect to the carrier 7. The auxiliary axles 9, 11 and with them the fingers 13, 15 turn left and right by briefly allowing the main gear wheel 21 to turn more quickly or slowly than the carrier 7. This moves the fingers so that during operation they briefly press against a bottle and move it.

There are two arms 27, 29 fastened on the main axle near the top extremity of the main axle 5, see figure 1. There are clamps 31, 33 at the extremities of the arms that can be moved up and down by movement devices 35, 37. The clamps are formed by mouth cups 39, 41, which can be partly brought over a bottle opening in order to grip a bottle by the top. The movement devices are formed by air cylinders 43, 45, in which pistons 47, 49 can be moved. The mouth cups are fastened on the free extremities of the pistons.

The movement of the clamps 31, 33 can be set independently of the turning of the fingers 13, 15. In this the time at which the clamp grips and then releases a bottle opening so that the bottles remain upright can be determined during operation.

Although in the above the invention is explained on the basis of the drawings, it should be noted that the invention is in no way limited to the embodiment shown in the drawings. The invention also extends to all embodiments deviating from the embodiment shown in the drawings within the context defined by the claims. Thus the carrier can for example be made with three or four or more arms, and movement devices for the clamps other than the air cylinders can be present, such as for example electromagnets.

## Claims

1. Stabiliser for bottles comprising a carrier provided with a main axle, in which carrier at least one turnable auxiliary axle is present on which a finger is fastened, which stabiliser moreover comprises devices to turn the auxiliary axle when the carrier turns, in such a way that the finger briefly pushes against a bottle during operation in order to move it, and which stabiliser comprises a main motor to drive the carrier, **characterised in that** the devices used to turn the auxiliary axle comprise a main wheel that is present concentrically with respect to the main axle, and an auxiliary wheel fastened on the auxiliary axle that is connected to the main wheel, and an auxiliary motor to drive the main wheel.

2. Stabiliser according to claim 1, **characterised in that** the auxiliary motor and/or the main motor are motors whose rotation speed can be adjusted depending on the angle.

3. Stabiliser according to claims 1 or 2, **characterised in that** the main wheel and the auxiliary wheel are gear wheels that are interlocked with each other.

4. Stabiliser according to claims 1, 2 or 3, **characterised in that** the carrier is fastened on the main axle and the main wheel can be freely turned about the main axle.

5. Stabiliser according to claim 4, **characterised in that** an arm is fastened on the main axle at a distance from the carrier to which a clamp for a bottle opening is fastened, which clamp can be moved in the axial direction of the main axle by movement devices, in which the movement of the clamp can be set independently of the turning of the finger.

6. Stabiliser according to claim 5, **characterised in that** the movement devices are formed by an air cylinder, which is fastened to the arm, and a piston that can be moved therein to which the clamp is fastened.
